# FASCICULE DE BREVET EUROPEEN

(11) **EP 1 964 313 B1**
(45) Date de publication et mention de la délivrance du brevet: **31.07.2013**
(21) Numéro de dépôt: 06830412.0
(22) Date de dépôt: 06.12.2006
(51) Int. Cl.: H04L 12/18, H04N 7/24

(54) **Procédé de transmission de services de télévision numérique, passerelle et réseau correspondants**
Verfahren zum Senden digitaler Fernsehdienste, entsprechendes Gateway und Netzwerk
Method for transmitting digital television services, corresponding gateway and network

(30) Priorité: 20.12.2005 FR 0553970
(43) Date de publication de la demande: 03.09.2008
(73) Titulaire: Thomson Licensing, 92100 Boulogne-Billancourt (FR)
(72) Inventeur: LUBBERS, Willem, F-35510 Cesson Sevigne (FR); AUTIER, Ingrid, F-35410 Domloup (FR); TAPIE, Thierry, F-35000 Rennes (FR)
(74) Mandataire: Le Dantec, Claude
(86) Numéro de dépôt international: PCT/EP2006/069366
(87) Numéro de publication internationale: WO 2007/071560

(56) Documents cités:
- EP-A- 1 377 054
- EP-A- 1 662 710
- WO-A-2005/036851
- CA-A1- 2 321 805
- US-A1- 2005 055 728
- STALLARD TANDBERG TELEVISION T PAILA NOKIA CORPORATION P: "DVB thoughts on Service Discovery and Selection draft-stallard-mmusic-dvb-thoughts-on-sds- 00; draft-stallard-mmusic-dvb-thoughts-on-sds- 00.txt" IETF STANDARD-WORKING-DRAFT, INTERNET ENGINEERING TASK FORCE, IETF, CH, 10 février 2003 (2003-02-10), XP015005363 ISSN: 0000-0004
- ONDEMS: "ONDEMS MEDIA GATEWAY - RELEASE 1.2 - REAL-TIME CONVERSION BETWEEN DIFFERENT I/O STANDARS" USER MANUAL, 2 mars 2005 (2005-03-02), XP002377642
- HANDLEY V JACOBSON ISI/LBNL M: "SDP: Session Description Protocol; rfc2327.txt" IETF STANDARD, INTERNET ENGINEERING TASK FORCE, IETF, CH, avril 1998 (1998-04), XP015008111 ISSN: 0000-0003
- HANDLEY ACIRI C PERKINS USC/ISI E WHELAN UCL M: "Session Announcement Protocol; rfc2974.txt" IETF STANDARD, INTERNET ENGINEERING TASK FORCE, IETF, CH, octobre 2000 (2000-10), XP015008757 ISSN: 0000-0003
- FINLAYSON ET AL: "The Multicast Attribute Framing Protocol: <draft-finlayson-mafp-02.txt>" NETWORK WORKING GROUP INTERNET DRAFT, XX, XX, 16 janvier 1998 (1998-01-16), pages 1-6, XP002311195

## Description

### 1. Domaine de l'invention.

La présente invention concerne le domaine de la télévision numérique et plus précisément sa distribution de services dans le domicile.

### 2. Arrière-plan technologique.

Selon l'état de la technique, il convient de proposer des solutions permettant la réception de services par des terminaux reliés à une passerelle (ou DNG de l'anglais « Delivery Network Gateway ») via un réseau par exemple de type IP (de l'anglais « Internet Protocol » ou « Protocole internet » en français défini par la norme référencée RFC791). Des opérateurs de services numériques possèdent chacun une offre de services. Ces services sont regroupés au sein d'ensembles de services. Le document EP-A-1 377 054 décrit la livraison de services multimédia d'un paquet de services compatibles avec DVB à des abonnées connectés à un réseau IP. Les services sont livrés par IP multicast._Chaque ensemble, nommé multiplex, est composé d'un ou de plusieurs flux de données numériques (ou « stream(s) » en anglais). Ces multiplex sont distribués via un lien de diffusion qui peut correspondre à une fréquence donnée émise par un satellite ou une tête de réseau câble ou émetteur TNT (ou télévision numérique terrestre ou DVB de l'anglais « Digital Video Broadcasting »). Chaque multiplex va pouvoir contenir un ou plusieurs services.

Un DNG est équipé d'un tuner de réception, le tuner permettant de se connecter sur le satellite, ou le câble, ou encore la TNT, en utilisant la fréquence donnée et de recevoir le multiplex de données numériques qui y est diffusé. Un service au sein de ce multiplex est défini comme une séquence d'émissions diffusées dans le cadre d'une programmation définie par un diffuseur. Lorsqu'un premier terminal relié au DNG demande un service, le tuner du DNG se cale sur la fréquence du multiplex comprenant le service requis. Les accès aux services des différents multiplex possibles par les autres terminaux sont alors perturbés, le tuner ne pouvant pas offrir tous les services associés à tous les multiplex pouvant être reçus, notamment pour les services qui se trouvent au sein d'autres multiplex et donc sur d'autres fréquences.

Cette technique présente donc l'inconvénient de ne pas être optimisée pour un réseau domestique qui comprend plusieurs terminaux reliés à une passerelle permettant de recevoir un nombre de multiplex limité.

### 3. Résumé de l'invention.

L'invention a pour but de pallier ces inconvénients de l'art antérieur.

L'invention est défini par les caractéristiques des revendications indépendantes.

### 4. Liste des figures.

L'invention sera mieux comprise, et d'autres particularités et avantages apparaîtront à la lecture de la description qui va suivre, la description faisant référence aux dessins annexés parmi lesquels
- la figure 1 illustre un système de réception de services de télévision selon un mode particulier de réalisation de l'invention ;
- la figure 2 est un synoptique très schématique d'une passerelle mise en oeuvre dans le système de la figure 1 ;
- les figures 3, 4 et 7 présentent des algorithmes mis en oeuvre par la passerelle de la figure 2 ;
- la figure 5 illustre une tablé mise en oeuvre par la passerelle de la figure 2 ;
- la figure 6 présente un algorithme mis en oeuvre par une passerelle selon une variante de réalisation de l'invention ;
- la figure 8 illustre un algorithme mis en oeuvre par un terminal du système de la figure 1 ; et
- la figure 9 présente un exemple d'échanges entre les différents éléments du système de la figure 1.

### 5. Description détaillée de l'invention.

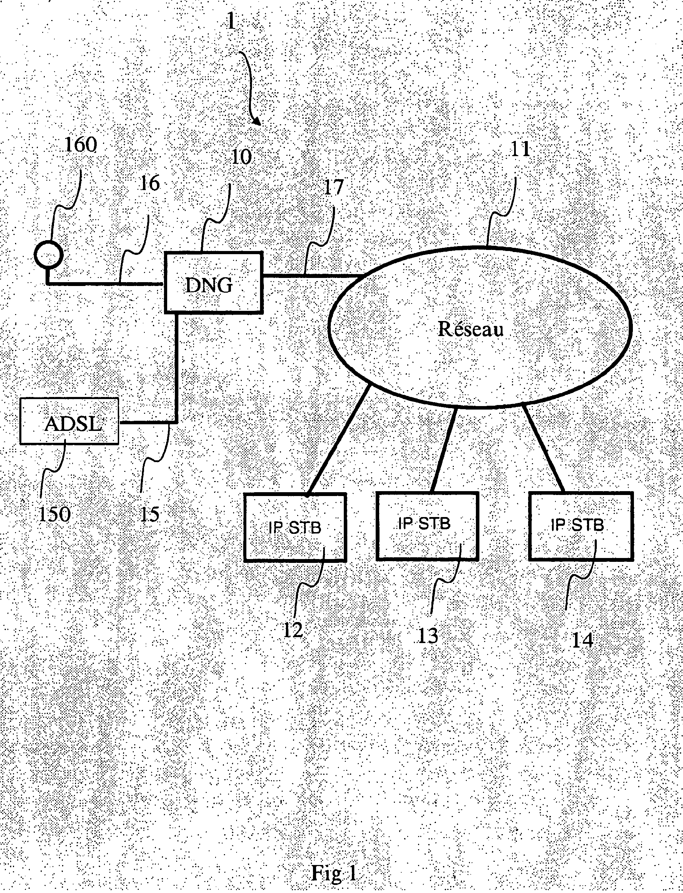

La figure 1 illustre un système de réception 1 de services de télévision selon un mode particulier de réalisation de l'invention.

Le système 1 comprend :
- une passerelle 10 ;
- une antenne de réception 160 reliée à la passerelle 10 via une liaison 16 ;
- une interface d'accès à un réseau xDSL (DSL signifiant Digital Subscriber Line) 150 relié à la passerelle 10 via une liaison 15;
- un réseau domestique 11 relié à la passerelle 10 via une liaison 17 ; et
- des terminaux (par exemple du type « set top box » ou récepteur de services numériques associés à un téléviseur
et/ou à un dispositif d'enregistrement) 12 à 14 reliés au réseau 11.

Le réseau 11 est préférentiellement de type IP et permet des échanges de données de services de télévision numérique entre la passerelle 10 et les terminaux 12 à 14.

L'antenne de réception 160 (satellite et/ou terrestre) comprend des moyens de réception de multiplex de services de télévision et/ou radio numériques (compatibles, par exemple, avec la norme DVB (de l'anglais « Digital Vidéo Broadcast » ou «Diffusion de vidéo numérique » en français). Elle est adaptée à la réception des signaux correspondant à des multiplex de services de télévision numériques et à les transmettre vers la passerelle 10. Chaque multiplex est associé à une fréquence. Le multiplex est reçu via une transmission satellite (cas par exemple d'une réception compatible avec la norme DVB-S) et/ou via une transmission terrestre (cas par exemple d'une réception compatible avec la norme DVB-T).

L'accès à un réseau ADSL (et plus généralement à un réseau xDSL ou à tout autre source audio/vidéo numérique ou analogique) est facultatif selon l'invention. Lorsque une connexion à une autre source qu'une source satellite ou hertzienne est mise en oeuvre, la passerelle 10 peut intégrer le service offert par cette autre source à la liste de services possibles par une réception via l'antenne et le ou les tuners (et le ou les multiplexeurs correspondant) reliés à cette antenne.

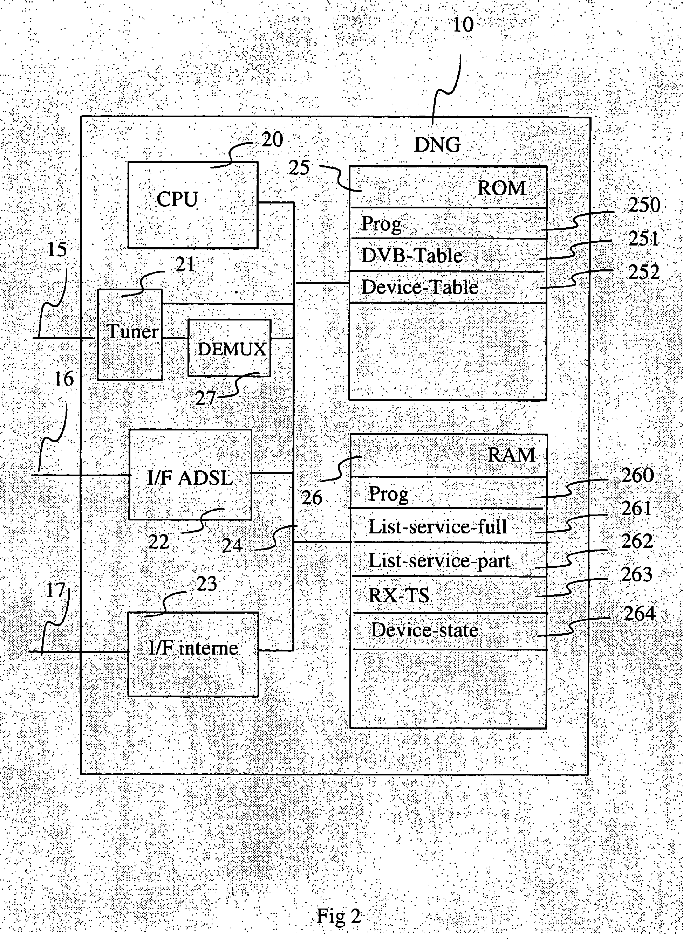

La figure 2 illustre schématiquement la passerelle 10.

La passerelle 10 comprend, reliés entre eux par un bus d'adresses et de données 24 :
- un microprocesseur 20 (ou CPU) ;
- une mémoire non volatile de type ROM (de l'anglais « Read Only Memory ») 25 ;
- une mémoire vive ou RAM (de l'anglais « Random Access Memory ») 26 ;
- un tuner 21 de réception du signal reçu sur la liaison 15 ;
- un demultiplexeur 27 recevant des données de multiplex transmis par le tuner 21 ;
- une interface xDSL 22 recevant des signaux xDSL via la liaison 16 ; et
- une interface 23 reliée au réseau domestique 11 via la liaison 17.

Le tuner 21 reçoit plusieurs multiplex de services de télévision numérique et ne peut recevoir qu'un seul multiplex à la fois. Néanmoins il est adapté à fournir simultanément ou séquentiellement les données issues de plusieurs services du multiplex reçu.

L'interface 23 reçoit et transmets des paquets (de type IP) de données informations en provenance ou à destination du réseau domestique et, en particulier, des terminaux 12 à 14.

Par ailleurs, chacun des éléments illustrés en figure 2 est bien connu de l'homme du métier. Ces éléments communs ne sont pas décrits ici.

On observe que le mot « registre » utilisé dans la description désigne dans chacune des mémoires mentionnées, aussi bien une zone de mémoire de faible capacité (quelques données binaires) qu'une zone mémoire de grande capacité (permettant de stocker un programme entier ou l'intégralité de données représentative d'une image).

La mémoire ROM 25 comprend notamment :
- un programme « prog » 255 ; et
- une table *DVB-Table* 251 de services sélectionnables; et
- une table *Device-Table* 252 comprenant la liste de tous les terminaux reliés à la passerelle 10 via le réseau 11 et qui sont enregistrés dans la passerelle 10, chaque terminal étant associé à une adresse de multidiffusion IP sur laquelle il doit rester en écoute.

La table *DVB-Table* 251 comprend notamment la liste des services considérés comme intéressants par l'utilisateur parmi tous les multiplex reçus par l'antenne 160. En effet, dans une phase de configuration de la passerelle, l'utilisateur a la possibilité d'éliminer certains services obtenus par scrutation (« scan » en anglais), par l'antenne 160, de toutes les fréquences sur desquelles se trouvent les multiplex. Pour certains multiplex, la table 251 peut contenir également des services déjà pré-programmés (par exemple services offerts par abonnements). En résumé, la table 251 comprend la liste des services sélectionnables. Pour chaque service sélectionnable, la table 251 comprend également une adresse IP de diffusion multiple (« multicast address » en anglais) qui sera utilisée, le cas échéant, pour une diffusion du service correspondant sur le réseau 11.

Les algorithmes mettant en oeuvre les étapes du procédé décrit ci-après sont stockés dans la mémoire ROM 25 associée à la passerelle 10 mettant en oeuvre ces étapes. A la mise sous tension, le microprocesseur 20 charge et exécute les instructions dé ces algorithmes.

La mémoire vive 26 comprend notamment :
- dans une registre 260, le programme de fonctionnement du microprocesseur 20 chargé à la mise sous tension de la passerelle 10 ;
- une liste 261, *List-Service-Full,* de services sélectionnables pouvant être reçus par l'antenne. 160 ;
- une liste 262, *List-Service-Part,* de services disponibles pour les terminaux de la liste 252 à un moment donné ;
- les paramètres identifiant le multiplex courant *RX-TS* 263 (le multiplex courant est reçu à l'instant considéré par le tuner 21 de la passerelle) ; et
- une table 264, *Device-State,* indiquant pour chaque terminal enregistré son état de réception.

La table 264 indique notamment si chaque terminal de la table 252 reçoit un service, et si oui, un identifiant du service reçu, ou, si au contraire, il ne reçoit rien.

Selon une variante de l'invention, la passerelle comprend plusieurs tuners. Elle est donc apte à recevoir simultanément plusieurs multiplex. Dans ce cas, la liste 265 de services disponibles est limité lorsque tous les multiplex sont utilisés par les terminaux et contient alors les services présents dans l'ensemble des multiplex reçus simultanément. Le registre *RX-TS* 263 identifie alors les multiplex courants, c'est-à-dire les multiplex reçus à l'instant considéré par au moins un tuner de la passerelle.

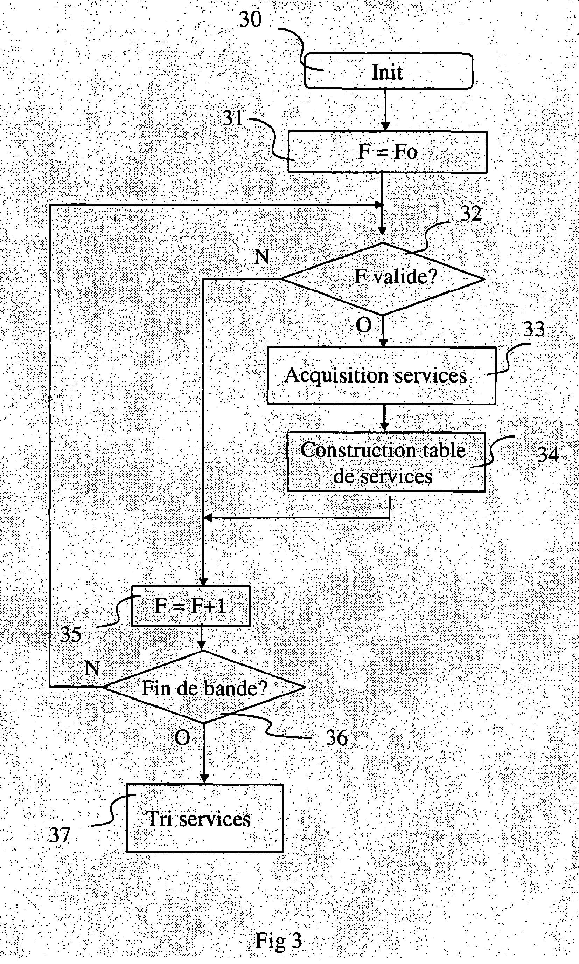

La figure 3 illustre.sous forme d'un organigramme, un algorithme de recherche de service (« service scan » en anglais) mis en oeuvre par la passerelle 10. Cet algorithme permet notamment de construire ou de mettre à jour la table 250 de services sélectionnables.

Après une étape 30 d'initialisation de la passerelle 10, au cours d'une étape 31, la passerelle commande le tuner 21 pour qu'il se cale sur une première fréquence Fo correspondant à la fréquence basse de la bande de fréquences correspondant aux multiplex susceptibles d'être reçus.

Ensuite au cours d'un test 32, la passerelle 10 vérifie si un la fréquence courante est valide.

Dans l'affirmative, au cours d'une étape 33, la passerelle 10 reçoit les informations relatives au multiplex correspondant à la fréquence courante et enregistre une liste de services correspondants avec le nombre de services offert par le multiplex.

Ensuite, au cours d'une étape 34, la passerelle attribue une adresse IP de multidiffusion à chacun des services présent dans le multiplex correspondante à la fréquence courante et enregistre dans une table le service, l'adresse IP avec le numéro de port correspondant.

Ensuite, au cours d'une étape 35, la passerelle 10 incrémente la fréquence courante.

Puis, au cours d'un test 36, elle vérifie si la fin de la bande de fréquences correspondant aux multiplex susceptibles d'être reçus est atteinte.

Dans la négative, le test 32 est réitéré.

Dans l'affirmative, au cours d'une étape 37, les services sont triés, les services hors abonnement et/ou n'intéressant pas l'utilisateur étant éliminés, les autres services sont sélectionnables et sont enregistrés dans la table 251.

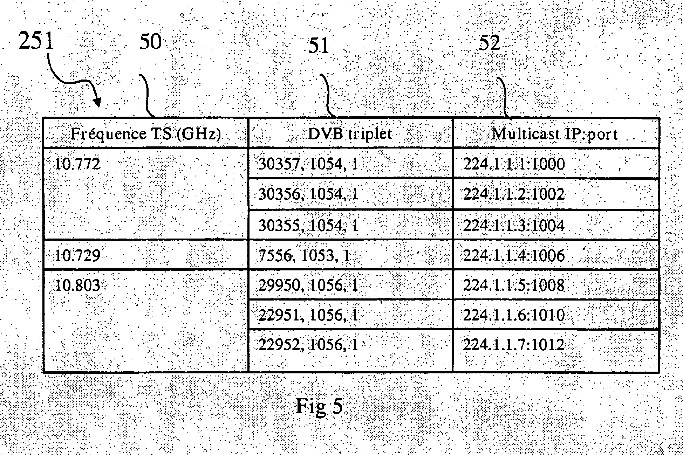

A titre illustratif, un exemple de table 251 est présenté en figure 5. Cette table 251 comprend :
- en colonne 50, la fréquence du multiplex (ou TS) exprimée en GHz qui permet de piloter le tuner ;
- en colonne 51, un triplet DVB précisant les paramètres propres à un service sélectionnable dans un multiplex donné (notamment les paramètres qui permettent au démultiplexeur 27 de démultiplexer le service correspondant à partir de son multiplex soit un identifiant de réseau, un identifiant de transport et un identifiant de service dans un multiplex (ou TS correspondant à Transport Stream ou flux de transport en français selon les normes DVB) ; et
- en colonne 52, une adresse IP de multi-diffusion et le port de passerelle correspondant.

Ainsi, pour les multiplex aux fréquences respectives 10,772 GHz et 10,803 GHz, trois services de télévision numérique sont sélectionnable et une adresse IP a été attribuée à chacun d'eux. De même, pour le multiplex à la fréquence 10,729GHz, un seul service est sélectionnable.

Dans le cas d'une réception satellite, une même fréquence peut contenir deux multiplex, avec polarisation respectivement horizontale et verticale. Selon cette variante, la table 251 comprend également la polarisation, le tuner devant connaître à la fois la fréquence et la polarisation pour recevoir le multiplex correspondant. En outre, selon cette variante, les étapes 31 à 36 de l'algorithme de recherche de service illustré en figure 3 sont exécutées pour chacune des polarisations possibles et la passerelle enregistre à la fois la polarisation et la fréquence associées à un multiplex.

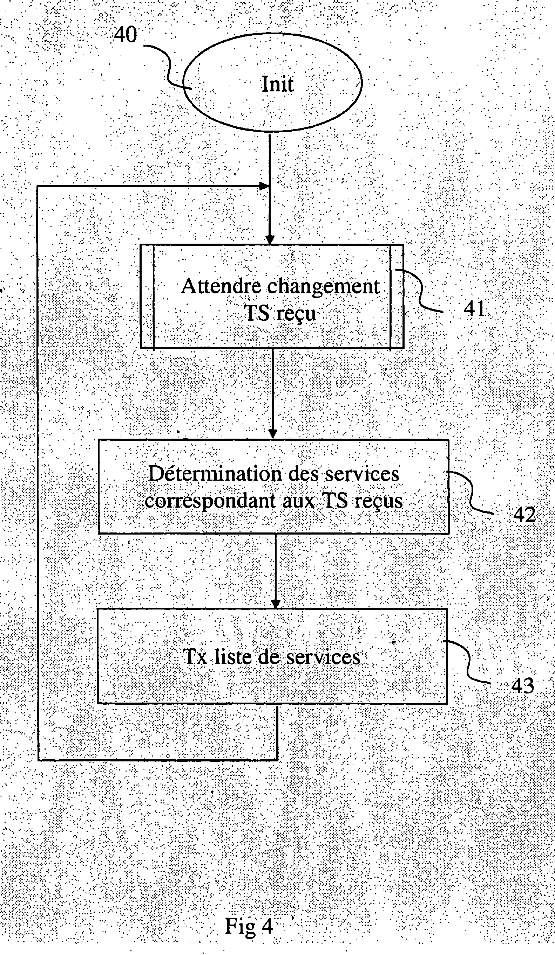

La figure 4 illustre sous forme d'un organigramme, un algorithme de transmission de services mis en oeuvre par la passerelle 10. Cet algorithme gère notamment la mise à jour des listes de services fournis aux terminaux enregistrés auprès de la passerelle 10.

Au cours d'une première étape 40, la passerelle initialise les différentes variables et paramètres utilisés et crée notamment la table 251 de services sélectionnable par mise en oeuvre de l'algorithme présenté en figure 3 et enregistre les terminaux 12 à 14 connectés au réseau 11 (par exemple, par programmation, et/ou la passerelle recherchant les terminaux et/ou chaque terminal se déclarant auprès de la passerelle) dans la table 252. Au cours de cette étape, la passerelle construit également la liste 261 de tous les services disponibles sous un format lisible par les terminaux en lien avec la table 251 et comprenant les informations significatives pour les terminaux, notamment, pour chaque service :
- son nom ;
- le fournisseur de service (optionnel) ;
- son adresse de diffusion sur IP avec le port ; et
- son format audio et/ou vidéo.
- et éventuellement d'autres informations qui peuvent être utiles pour les terminaux.
La passerelle 10 initialise la table 264 avec des états « non connectés » associés à chaque terminal. Puis, la passerelle 10 transmis transmet à chacun des terminaux enregistrés, la liste 261. Cette opération peut se faire notamment selon l'une des manières suivantes :
- la passerelle transmet, à chaque terminal, un message sur l'adresse IP correspondante sur laquelle le terminal reste en écoute est qui comprend la liste 261 selon le protocole UDP (mode de transmission appelé multicast); ou
- chaque terminal transmet à la passerelle 10 une commande du type *get* (rechercher en français) suivant un protocole HTTP (ou « HyperText Transfer Protocol » défini par la norme RFC 2616) et la passerelle répond avec une commande du type *put* (mettre en français) avec la liste 261 suivant le même protocole, chaque terminal ayant sa propre adresse IP pour obtenir les informations émises par la passerelle (mode de transmission appelé unicast).

Dans le cadre de l'invention, la diffusion de message selon un mode de transmission multicast (ou multidiffusion) se fait préférentiellement selon un protocole UDP (ou « User Datagram Protocol », qui est défini dans la norme RFC 768) ou UDP/RTP (ou Realtime Transmission Protocole défini dans la norme rfc 1889). L'utilisation de RTP permet de rajouter une information de date (ou « timestamp » en anglais) à des paquets, et donc de restituer, en réception, le moment de l'envoi quand on ne maîtrise pas la jigue (variation de durée de transmission). L'utilisation de RTP permet également d'insérer des numéros de séquence et donc de réordonner des paquets qui seraient reçus dans le désordre.

Puis, au cours d'une étape 41, la passerelle 10 se met en attente d'un changement dans le multiplex reçu et/ou de service demandé. Ce changement correspond notamment au basculement d'un multiplex sur un autre, au début d'une réception de multiplex ou à l'arrêt de réception de multiplex. Une telle étape est, en particulier, la conséquence d'une requête de service sur un multiplex, le changement de services requis (entraînant également un changement de multiplex) et/ou l'arrêt de transmission d'un service vers un terminal.

Ensuite, au cours d'une étape 42, la passerelle détermine les multiple pouvant être reçus par le tuner 21. Selon le mode de réalisation décrit, un seul multiplex peut être reçu par le tuner 21. Dans ce cas, si aucun service n'est transmis à un terminal, la liste des services pouvant être reçus correspond à l'ensemble des services disponibles sur les multiplex (ou flux) reçus par l'antenne 160 (sous réserve d'abonnement valide). Sinon, la passerelle 21 transmet au moins un service d'un même multiplex reçu par le tuner 21 à un ou plusieurs terminaux 12 à 14. La liste des services disponibles est alors la liste des services présents sur le multiplex reçu. Cette liste est alors enregistrée dans le registre 262.

Puis, au cours d'une étape 43, la passerelle 10 transmet la liste de services disponibles 262 à chacun des terminaux 12 à 14 enregistrés auprès de la passerelle 10 qui sont dans un état « non connectés à un service». Si un seul terminal reçoit un service du multiplex démultiplexé par le démultiplexeur 27, correspondant aux paramètres identifiant le multiplex enregistré dans le registre 263, il peut recevoir un service sélectionnable quelconque (en effet, pour changer de service, il doit arrêter la réception du service courant) ; la passerelle 10 peut donc lui transmettre la liste 261 de tous les services sélectionnables. En revanche, si deux terminaux reçoivent un service d'un même multiplex, ils empêchent la passerelle de basculer sur un autre multiplex. Dans ce cas, la passerelle 10 leur transmet la liste 262 réduite aux services sélectionnables du multiplex courant.

Selon une variante de réalisation, au cours de l'étape 43, la passerelle 10 envole aux terminaux recevant la liste 262 une information à afficher du typé « liste de service réduite » (via par exemple un message suivant un protocole http si le terminal considéré est équipé d'un navigateur (browser en anglais)) avec ou sans description détaillée des services disponibles. Cette information peut aussi comprendre un identifiant du ou des terminaux recevant un service et donc responsable de la limitation d'accès aux services.

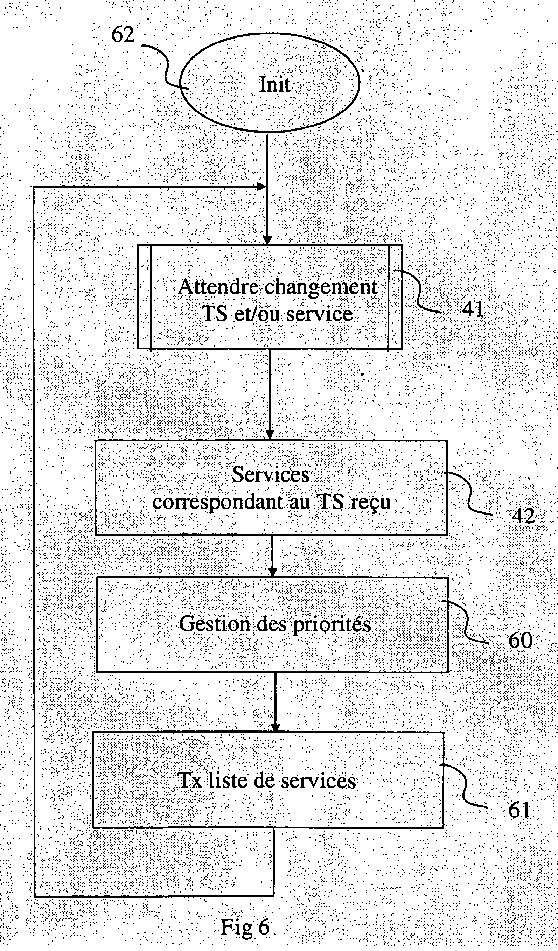

La figure 6 illustre sous forme d'un organigramme, un algorithme de transmission de services mis en oeuvre par la passerelle 10 selon une variante de réalisation de l'invention, les terminaux possédant une priorité d'accès au services. Selon cette variante, chaque terminal est affecté d'une priorité d'accès aux services audio/vidéo, un terminal plus prioritaire que d'autres terminaux prenant la main sur tous les services même si un autre terminal de priorité inférieure accède déjà à un service d'un autre multiplex. Dans ce cas, la liste des services disponibles est fonction de l'accès à un multiplex par le terminal le plus prioritaire.

Au cours d'une première étape 62, la passerelle effectue une initialisation similaire à l'étape 40 décrite précédemment en prenant en compte la priorité des terminaux enregistrés auprès de la passerelle. La priorité est notamment enregistrée dans la table 252. Cette priorité peut être notamment définie par l'utilisateur (par exemple, sous forme d'un dialogue homme-machine avec la passerelle directement (la passerelle étant alors munie d'un écran et d'un moyen permettant d'entrer des données (clavier, souris, écran tactile...)) ou via un terminal adapté) ou par configuration des terminaux (par exemple suivant le type ou un paramètres propres à chaque machine préenregistré ou introduit par un utilisateur), la priorité pouvant être transmise d'un terminal à la passerelle via un message http. Selon différentes variantes pour la gestion des priorités, les priorités, peuvent être fixes ou variables. Les priorités peuvent également être définies en fonction des connexions, d'un menu sur la passerelle et/ou un ou plusieurs terminaux, et/ou d'un profil d'utilisateur (par exemple, avec code d'accès).

Les étapes suivantes 41 et 42 sont similaires aux étapes de l'algorithme illustré en figure 4 ; elles portent donc les mêmes références et ne seront pas décrites davantage.

Ensuite, au cours d'une étape 60, la passerelle demande au multiplexeur de transmettre le service au terminal demandeur dans les cas suivant :
- aucun service n'est transmis à un terminal ;
- le service demandé est présent sur le multiplex courant 263 (multiplex correspondant à un service demandé par un autre terminal) ; ou
- le terminal est de priorité strictement supérieure à un terminal recevant un service.

Dans le dernier cas, le service correspondant n'est plus transmis au ou aux terminaux recevant le service (sauf s'il est aussi présent dans le multiplex correspondant au service demandé par le terminal prioritaire).

Avantageusement, selon l'invention, un terminal de moindre priorité ne peut pas demander un service auquel il n'a pas accès, puisqu'il à reçu une liste de services limitée aux services disponibles pour lui.

Selon différentes variantes de l'invention, la passerelle envoie ou non au terminal ne recevant plus le service demandé un message d'information et envoie un service par défaut présent sur le nouveau multiplex courant (service préprogrammé ou autre service) ou n'envoie plus rien. Selon une variante de l'invention, la passerelle détectant un changement de multiplex entraînant une coupure de service pour un terminal non prioritaire, peut transmettre, au terminal plus prioritaire un message d'avertissement (par exemple « cette action entraînera la perte du service pour le terminal « identifiant ») et/ou de confirmation (l'action de basculement du multiplex ne se faisant alors que si l'action demandée est confirmée).

Au cours de l'étape 61, la liste 262 des services disponibles est alors la liste des services présents sur le multiplex reçu. La passerelle 10 transmet la liste de services disponibles 262 à chacun des terminaux 12 à 14 enregistrés auprès de la passerelle 10 qui ont une priorité strictement inférieure au terminal de plus forte priorité accédant à un service. Ainsi, ces terminaux ne peuvent accéder qu'aux services du multiplex courant. La passerelle 10 transmet également la liste 261 à chacun des terminaux qui ont une priorité strictement supérieure au terminal de plus forte priorité accédant à un service. Ainsi, un ces terminaux de plus forte priorité peuvent accéder à un service sélectionnable quelconque. Si un service du multiplex courant est reçu par un seul terminal de plus forte priorité parmi les terminaux recevant un service, il peut recevoir un service sélectionnable quelconque (en effet, pour changer de service, il doit arrêter la réception du service courant) et la passerelle peut lui transmettre la liste 261. En revanche, si deux terminaux de priorité égale et de plus forte priorité parmi les terminaux recevant un service, reçoivent un service d'un même multiplex, ils empêchent la passerelle de basculer sur un autre multiplex. Dans ce cas, la passerelle 10 leur transmet la liste 262 réduite aux services sélectionnables du multiplex courant. Avantageusement, les priorités des terminaux sont toutes différentes pour éviter des situations de conflits d'accès.

Afin de détecter un arrêt de réception d'un service par un terminal, la passerelle envoie des messages IGMP (correspondant au protocole « Internet Group Management Protocol » défini par la norme RFC 1112) du type *keep-alive* (ou maintien en français) vers les terminaux pour vérifier que le terminal est toujours connecté au service demandé. Si le terminal est connecté, il répond avec un message IGMP. L'absence de réponse indique qu'il n'est plus connecté. Un terminal peut également indiquer la fin d'une requête de service via une commande IGMP du type *leave* (ou abandon en français). L'utilisation du protocole IGMP facilite l'implémentation des mécanismes décrits, car la vidéo est transmise en multicast et un terminal utilisera donc préférentiellement l'IGMP pour demander la connexion à un flux. D'autre part l'IGMP contient déjà le mécanisme de maintien, ce qui facilite la gestion de l'arrêt d'un service lorsqu'un terminal est éteint accidentellement (coupure de l'alimentation, panne, ...). L'utilisation des messages d'IGMP est donc préférable pour la mise en oeuvre de l'invention et évite la nécessité de concevoir et/ou implémenter un autre protocole pardessus (comme RTSP par exemple). Suite à l'arrêt de réception de service par un terminal, la passerelle met à jour l'état du terminal correspondant dans la table 263 et la liste 262 et transmet aux terminaux l'une des listes 261 et 262 selon les mêmes conditions qu'indiquées dans la description de l'étape 43 (si aucune priorité n'est gérée) ou 61 (avec mécanisme de priorité géré).

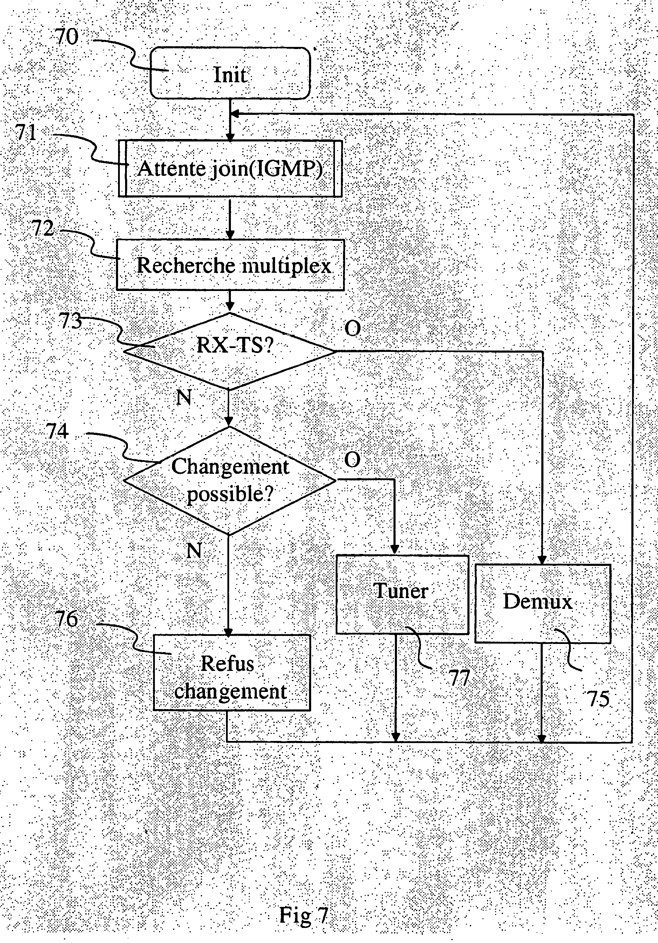

La figure 7 illustre sous forme d'un organigramme, un algorithme de traitement d'une réception de demande de service mis en oeuvre par la passerelle 10.

Après un étape d'initialisation 70, au cours d'une étape 71, la passerelle 10 se met en attente de la réception d'une commande *join* (« jonction » en français) selon le protocole IGMP émise par un terminal sur l'adresse de multi-diffusion : attribuée au terminal. Cette commande correspond à une demande de service présent parmi les services de la dernière liste 261 ou 262 préalablement reçue.

Ensuite, au cours d'une étape 72, la passerelle cherche la référence du multiplex correspondant au service dont l'adresse de diffusion est donné par l'adresse IP présente dans la commande *join* reçue.

Puis au cours d'une étape 73, la passerelle 10 vérifie si ce multiplex correspond au multiplex courant.

Dans l'affirmative, au cours d'une étape 75, la passerelle demandé au démultiplexeur l'envoi du service requis vers le terminal demandeur et effectue la transmission des listes de services selon l'une des étapes 43 ou 61 précédemment décrites. Ensuite, l'étape 71 est réitérée.

Dans la négative, selon une variante mettant en oeuvre une gestion de priorité, au cours d'une étape 74, la passerelle vérifie si un changement de multiplex est possible comme indiqué en regard de la description de l'étape 60.

Si un changement de multiplex est possible, au cours d'une étape 77, la passerelle demande au tuner de changer de multiplex et au démultiplexeur l'envoi du service requis vers le terminal demandeur et effectue la transmission des listes de services selon l'étape 61 précédemment décrite. Ensuite, l'étape 71 est réitéré.

Si un changement de multiplex n'est pas possible, au cours d'une étape 76, la passerelle indiqué au terminal demandeur qu'il ne peut pas fournir le service demandé. Ensuite, l'étape 71 est réitérée. En théorie, l'invention évite ou limite que l'on passe par l'étape 71. Néanmoins, par sécurité, le test 73 et l'étape 76 (selon certaines mises en oeuvre, une liste de services disponibles peut être mal reçue ou reçue ou lue en retard). Selon une variante de l'invention avec aucun mécanisme de priorité présent, on ne met pas en oeuvre le test 73, l'étape 75 suivant immédiatement l'étape 72. Selon une autre variante de l'invention avec mécanisme de priorité, on ne met pas en oeuvre le test 74 et l'étape 76, l'étape 77 suivant immédiatement une sortie négative du test 73.

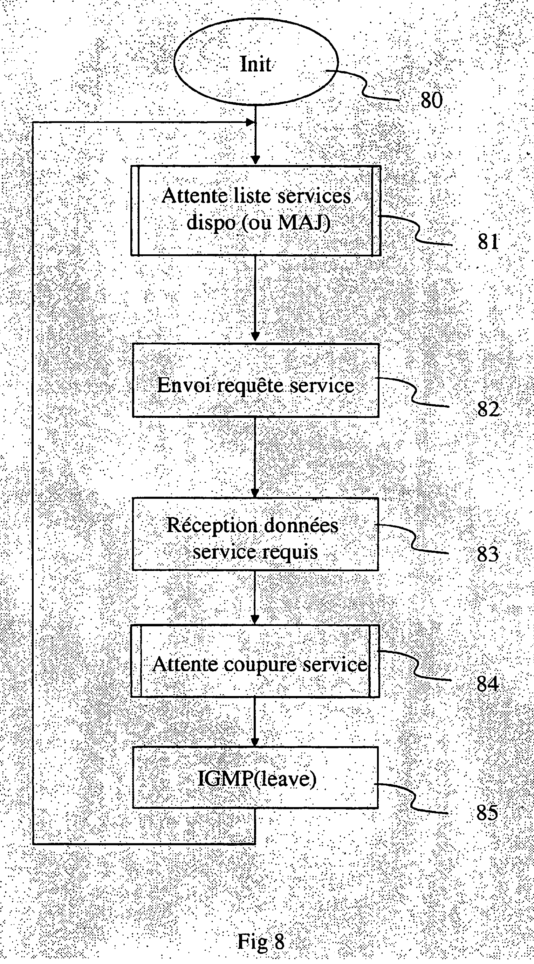

La figure 8 présente un algorithme de réception de services mis en oeuvre par le.terminal 12.

Au cours d'une étape 80 d'initialisation, le terminal 12 met à jour les paramètres propres à la réception de services en fonction de sa configuration.

Ensuite, au cours d'une étape 81, le terminal 12 attend puis reçoit une liste de service disponibles et l'enregistre dans sa mémoire locale. Le terminal 12 peut ainsi la présenter à l'utilisateur.

Puis, au cours d'une étape 82, le terminal 12 transmet à la passerelle une requête de service, le service étant choisi parmi les services disponibles appartenant à la liste reçu à l'étape 81. La liste des services dépendant des éventuels services en cours de transmission à au moins un autre terminaux, il n'y a pas de conflit pour accéder au multiplex contenant les éventuels services transmis aux autres terminaux et le service requis par le terminal 12.

Ainsi, au cours d'une étape 83, le terminal 12 reçoit les données correspondant au service requis puisque la passerelle reçoit le multiplex correspondant. De cette manière, il n'y a pas d'échec associé à la non possibilité de réception du multiplex correspondant au service requis (le tuner est capable de recevoir ce multiplex sans perturber les autres terminaux). Selon la variante mettant en oeuvre une priorité d'accès parmi les terminaux, seuls les terminaux de moindre priorité sont susceptibles de ne plus recevoir le service qu'ils ont éventuellement requis.

Puis, au cours d'une étape 84, le terminal 12 attend la fin du service (correspondant notamment à une interruption par l'utilisateur ou à l'écoulement d'une temporisation). Selon la variante mettant en oeuvre une priorité d'accès parmi les terminaux, la fin du service peut également correspondre à la réception d'un message indiquant que le service n'est plus disponible (ce qui est le cas lorsqu'un terminal plus prioritaire demande un service présent sur un autre multiplex que le multiplex comprenant le service requis à l'étape 82) ou être remplacée par un basculement vers un service par défaut.

Ensuite, au cours d'une étape 85, le terminal 12 transmet à la passerelle 10 une information indiquant la fin du service requis de sorte que la passerelle puisse mettre à jour la liste des services disponibles. Cette étape 12 peut être omise si la fin du service est liée à la passerelle 10 (ce qui peut être le cas notamment lors d'une mise en oeuvre d'une priorité parmi les terminaux).

Après l'étape 85, l'étape 81 est réitérée.

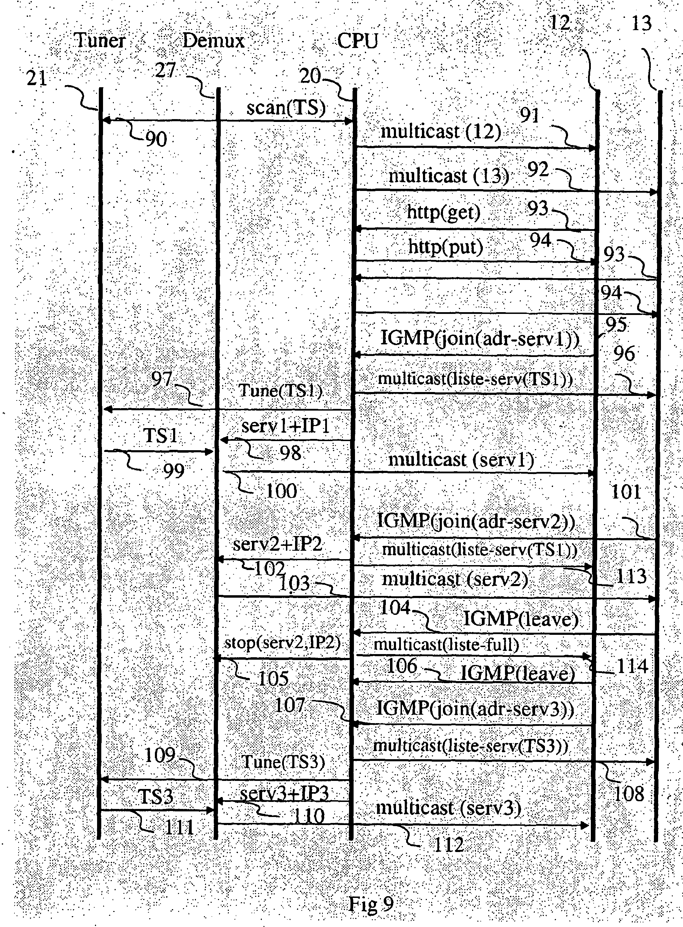

La figure 9 présente un exemple d'échanges entre le tuner 21, le démultiplexeur 27, le microprocesseur 20 et les terminaux 12 est 13. Afin de faciliter la compréhension des mécanismes mis en jeu, seuls les échanges les plus importants sont représentés. Par ailleurs, on suppose que la chronologie des échanges se déroule de haut en bas suivant la figure 9.

Ainsi, au cours d'une première étape 90, le CPU 20, et le tuner 90 échangent des informations relatives aux multiplex pouvant être reçus pour la construction de la table 251. L'échange 90 se déroule préférentiellement durant une phase d'initialisation.

Ensuite, selon un mode multicast, le CPU 20 diffuse vers les terminaux de messages 91 et 92 comprenant la liste des services sélectionnables, chaque terminal écoute un message relative à l'adresse IP qui lui a été attribuée. Alternativement, un terminal (12 ou 13 selon l'illustration de la figure 9) peut transmettre une commande 93 get http et recevoir la liste des services sélectionnables via une commande 94 *put* http. Selon cette, variante, les terminaux sont responsables de l'émission régulière de commandes 93 pour se tenir informés d'éventuels changements. Pour des raisons de lisibilité, dans ce qui suit, on choisit d'utiliser uniquement la diffusion en un mode multicast.

. Des échanges suivant une phase de fonctionnement quelconque vont maintenant être décrits.

Ainsi, le terminal 12 transmet à l'adresse IP de la passerelle, une commande *join* IGMP contenant l'adresse d'un service requis (qui est par exemple présent sur un multiplex TS1).

Suite à la réception de cette requête, le CPU transmet une liste 262 des services présents sur le multiplex TS1 aux autres terminaux (message 96 pour le terminal 13), demande au tuner de se caler sur le multiplex TS1 (message 97) et au démultiplexeur 27 d'émettre le service requis sur l'adresse IP multicast correspondante (message 98) en fonction des données enregistrées dans la table 251.

Le tuner émet alors les données 99 relatives au multiplex TS1 vers le démultiplexeur qui transmet suivant un protocole UDP (ou User Datagram Protocol) le service requis par le message 98 sur l'adresse de diffusion multicast indiquée par le CPU.

Suivant notre exemple, le terminal 13 transmet à l'adresse IP de la passerelle, une commande *join* IGMP contenant l'adresse d'un service requis *serv2* différent du service requis par le terminal 12.

Ce service est disponible sur le multiplex TS1 puisque le terminal 13 a pris en compte le message 96. Le CPU demande alors au démultiplexeur 27 de transmettre le service requis sur l'adresse IP multicast correspondante (message 102) et transmet la liste 262 au terminal 12 (message 113). Le démultiplexeur diffuse alors le service requis par le message 102 sur l'adresse multicast indiquée par le CPU.

A titre illustratif, le terminal 13 transmet une commande 104 IGMP *leave* au CPU 20. Le CPU transmet alors une commande 105 d'arrêt de la transmission du service serv2 au démultiplexeur et une liste 261 de tous les services sélectionnables au terminal 12 qui est désormais le seul terminal à recevoir un service sur le multiplex TS1 (message 113).

Ensuite, on présente une opération de basculement de multiplex initiée par le terminal 12 qui demande d'abord au CPU un arrêt du service reçu (message 106 *leave* IGMP) puis un service service *serv3* appartenant à un multiplex TS3 (commande *107 join* IGMP). Les commandes 106 et 107 étant proches, il est possible que le CPU n'ait pas eu le temps de mettre à jour la liste de diffusion réduite et de transmettre une mise à jour aux autres terminaux. Ainsi, après réception de la commande 107, le CPU transmet une liste 262 des services présents sur le multiplex TS3 aux autres terminaux (message 108 pour le terminal 13), demande au tuner de se caler sur le multiplex TS3 (message 109) et au démultiplexeur 27 de transmettre le service requis sur l'adresse IP multicast correspondante (message 110) en fonction des données enregistrées dans la table 251. Le tuner émet alors les données 111 relatives au multiplex TS3 vers le démultiplexeur qui transmet suivant un protocole UDP le service requis par le message 112 sur l'adresse multicast indiquée par le CPU.

Bien entendu, l'invention ne se limite pas aux modes de réalisation décrits précédemment.

En particulier, lorsque la passerelle est connectée à une liaison xDSL comme indiqué en figure 1, elle peut proposer un service disponible via xDSL aux terminaux. En général, la bande passante xDSL est limitée et un nombre limité de services xDSL peut être accédé simultanément (par exemple un seul service parmi plusieurs services disponibles peut être reçu via xDSL). Dans ce cas, lorsqu'aucun service xDSL n'est reçu, les listes de services sélectionnables comprennent des services disponibles via xDSL et, éventuellement sélectionnés par un utilisateur où un système d'abonnement, ces services s'ajoutant ainsi aux services sélectionnables (liste 261) ou disponibles à un instant précis (listes 261 ou 262). Lorsqu'un service est disponible à la fois via xDSL ou via le tuner, une priorité d'accès entre xDSL et tuner peut être définie selon un critère quelconque et notamment le coût, la qualité de service, la priorité des terminaux recevant un service ou demandeurs, le fait qu'un service demandé appartient à multiplex en cours de réception (si la capacité du tuner est déjà utilisée, on a tout intérêt à utiliser cette capacité plutôt qu'à limiter l'accès aux services pour les autres terminaux en utilisant une réception via xDSL). De même, selon une variante de l'invention, des mécanismes de basculement entre xDSL et le tuner sont prévus en fonction des services demandés et notamment si un seul service est demandé sur le multiplex courant, alors qu'un terminal demande un service présent sur un autre multiplex qui comprend également le service reçu par ailleurs via xDSL. Lorsqu'un service xDSL est reçu, la passerelle met à jour les listes de services disponibles en fonction de se service : la liste de services disponibles réduite comprenant ce service et les services du multiplex courant ; cette liste est transmise
- aux terminaux de moindre priorité ou,
- si aucun mécanisme de priorité parmi les terminaux n'est mis en oeuvre, aux terminaux non connectés, et à tous les terminaux connectés si au moins deux terminaux reçoivent un service offert par le multiplex courant.
Une liste comprenant la liste des services sélectionnables via le tuner et le service reçu via xDSL est transmise aux terminaux de plus forte priorité ou, si aucun mécanisme de priorité parmi les terminaux n'est mis en oeuvre, à un unique terminal qui serait connecté au multiplex courant. La liste de tous les services sélectionnables via le tuner ou xDSL est transmise au terminal recevant un service via xDSL.

La passerelle comprend plus d'un tuner, par exemple deux, trois ou plus (par exemple un ou plusieurs tuners recevant un multiplex via un ou plusieurs satellites et/ou un ou plusieurs tuners recevant un multiplex via un système DVB-T. Tant que la capacité de réception d'un multiplex n'est pas atteinte, la H passerelle transmet la liste des services sélectionnables présents sur tous les multiplex. Dès que la capacité des tuners est atteinte, la passerelle met en oeuvre l'invention comme décrit précédemment, l'ensemble des tuners. étant vu comme un seul tuner pour la gestion des listes de services disponibles. Selon une variante, lorsqu'un mécanisme de priorité d'accès est mis en oeuvre, si un terminal prioritaire souhaite l'accès à un service qui n'est pas présents sur l'un des multiplex courants (c'est-à-dire reçus à l'instant considéré par l'un des tuners), préférentiellement, la passerelle identifie, pour chaque multiplex courant, le terminal de plus forte priorité recevant un service de ce multiplex, identifie le terminal de moindre priorité parmi les terminaux de plus forte priorité et attribue le multiplex courant correspondant au terminal plus prioritaire qui requiert un service. D'autres scénarios sont envisageables et pourront être mis en oeuvre suivant les mêmes principes que ceux évoqués ci-avant et notamment :
- lorsque aucune priorité n'est attribuée, un terminal n'ayant pas accès à un service reçoit une liste de services réduite correspondant aux multiplex courants, et un terminal recevant un service sur un multiplex ne fournissant pas de service à d'autres terminaux reçoit préférentiellement une liste de services correspondant à la liste de tous les services sélectionnables ;
- lorsqu'une priorité est attribuée, un terminal de plus forte priorité que les terminaux connectés reçoit une liste de services correspondant à la liste de tous les services sélectionnables, un terminal de moins.forte priorité que les terminaux connectés reçoit une liste de services réduite lorsque les capacités des tuners sont atteinte.

Par ailleurs, les variantes avec liaison xDSL ou toute autre liaison filaire, et avec un ou plusieurs tuners peuvent être combinées selon l'invention.

L'invention est également compatible avec tout type de réseau associé à la passerelle, ce réseau n'étant pas nécessairement domestique, mais pouvant être à courtes ou longues distances (par exemple réseau internet).

L'invention est également compatible avec des mises en oeuvre de passerelle différentes de celle de la figure 2 et notamment avec des passerelles ayant une structure différentes et/ou des interfaces ou des éléments constitutifs différents (composants plus ou moins intégrés ; ...).

## Revendications

1. Procédé de transmission, à des terminaux, de services de télévision numérique par une passerelle (10) apte à recevoir une pluralité de multiplex numériques, chaque multiplex comprenant au moins un service audiovisuel numérique, la passerelle étant adaptée à recevoir un nombre limité de multiplex parmi ladite pluralité, ledit nombre étant limité en fonction de la capacité d'un ou de plusieurs tuners de réception, et à les transmettre à au moins un terminal (12 à 14) relié à ladite passerelle, comprenant une étape de transmission (43) d'une liste (261, 262) d'au moins un service, dits services sélectionnables, à au moins un desdits terminaux, les services sélectionnables étant présents sur les multiplex que la passerelle peut recevoir, **caractérisée en ce que** ladite liste de services sélectionnables étant dépendante des services déjà transmis à au moins un autre desdits terminaux, lesdits terminaux possédant une priorité d'accès aux services, ladite liste des services étant en plus fonction de l'accès à un multiplex par l'un desdits terminaux le plus prioritaire, de façon à ce que, tant que la capacité de la passerelle à recevoir des multiplex n'est pas atteinte, la liste de services sélectionnables comprend les services présents sur tous les multiplex pour desdits terminaux, et dès que ladite capacité est atteinte, la liste des services sélectionnables par un terminal de moindre priorité que ledit terminal le plus prioritaire est réduite aux services sélectionnables de ou des multiplex reçus par la passerelle.

2. Procédé selon la revendication 1, **caractérisé en ce que**, le procédé comprend une détermination (60) d'une priorité maximale de terminal en fonction de la priorité des terminaux accédant à un service.

3. Procédé selon l'une quelconque des revendications 1 à 2, **caractérisé en ce que** lesdits multiplex sont transmis par satellite.

4. Procédé selon l'une quelconque des revendications 1 à 3, **caractérisé en ce que** lesdits multiplex sont du type multiplex de télévision numérique terrestre.

5. Procédé selon l'une quelconque des revendications 1 à 4, **caractérisé en ce que** ladite étape de transmission (96, 113, 114, 108) d'une liste d'au moins un service, dits services sélectionnables, à au moins un desdits terminaux est une diffusion suivant un protocole UDP.

6. Procédé selon l'une quelconque des revendications 1 à 5, **caractérisé en ce qu'**il comprend au moins une étape de gestion (95, 101, 104, 107) d'un envoi de service à un terminal comprenant une transmission d'une commande selon un protocole IGMP.

7. Passerelle (10) apte à recevoir une pluralité de multiplex numériques et à transmettre des services de télévision numérique à des terminaux, chaque multiplex comprenant au moins un service audiovisuel numérique, la passerelle étant adaptée à recevoir un nombre limité de multiplex parmi ladite pluralité, ledit nombre étant limité en fonction de la capacité d'un ou de plusieurs tuners de réception, et à les transmettre à au moins un terminal (12 à 14) relié à ladite passerelle, comprenant des moyens de transmission d'une liste (261, 262) d'au moins un service, dits services sélectionnables, à au moins un desdits terminaux, les services sélectionnables étant présents sur les multiplex que la passerelle peut recevoir, **caractérisée en ce que** ladite liste de services sélectionnables étant dépendante des services déjà transmis à au moins un autre desdits terminaux, lesdits terminaux possédant une priorité d'accès aux services, ladite liste des services étant en plus fonction de l'accès à un multiplex par l'un desdits terminaux le plus prioritaire, de façon à ce que, tant que la capacité de la passerelle à recevoir des multiplex n'est pas atteinte, la liste de services sélectionnables comprend les services présents sur tous les multiplex pour desdits terminaux, et dès que ladite capacité est atteinte, la liste des services sélectionnables par un terminal de moindre priorité que ledit terminal le plus prioritaire est réduite aux services sélectionnables de ou des multiplex reçus par la passerelle.

8. Réseau de communication (1) comprenant des terminaux (12 à 14) et une passerelle (10), selon la revendication 7, apte à recevoir une pluralité de multiplex numériques et à transmettre des services de télévision numérique, chaque multiplex comprenant au moins un service audiovisuel numérique, la passerelle étant adaptée à recevoir un nombre limité de multiplex parmi ladite pluralité, ledit nombre étant limité en fonction de la capacité d'un ou de plusieurs tuners de réception, et à les transmettre auxdits terminal reliés à ladite passerelle,
la passerelle comprenant des moyens de transmission d'une liste (261, 262) d'au moins un service, dits services sélectionnables, à au moins un desdits terminaux, les services sélectionnables étant présents sur les multiplex que la passerelle peut recevoir, ladite liste de services sélectionnables étant dépendante des services déjà transmis à au moins un autre desdits terminaux, lesdits terminaux possédant une priorité d'accès aux services, ladite liste des services étant en plus fonction de l'accès à un multiplex par l'un desdits terminaux le plus prioritaire, de façon à ce que, tant que la capacité de la passerelle à recevoir des multiplex n'est pas atteinte, la liste de services sélectionnables comprend les services présents sur tous les multiplex pour desdits terminaux, et dès que ladite capacité est atteinte, la liste des services sélectionnables par un terminal de moindre priorité que ledit terminal le plus prioritaire est réduite aux services sélectionnables de ou des multiplex reçus par la passerelle.

## Patentansprüche

1. Verfahren zum Übertragen, an Endgeräte, von Diensten des digitalen Fernsehens über ein Gateway (10), der in der Lage ist, eine Vielzahl von digitalen Multiplexen zu empfangen, wobei jedes Multiplex mindestens einen digitalen audiovisuellen Dienst umfasst, wobei der Gateway eingerichtet ist, um eine begrenzte Anzahl an Multiplexen aus der Vielzahl zu empfangen, wobei die Anzahl in Abhängigkeit von der Kapazität von einem oder mehreren Empfangstunern begrenzt wird, und um sie an mindestens ein Endgerät (12 bis 14) zu übertragen, das an den Gateway angeschlossen ist, umfassend einen Schritt zum Übertragen (43) einer Liste (261, 262) von mindestens einem Dienst, auswählbare Dienste genannt, an mindestens eines der Endgeräte, wobei die auswählbaren Dienste auf den Multiplexen präsent sind, die der Gateway empfangen kann, **dadurch gekennzeichnet, dass** die Liste von auswählbaren Diensten von bereits an mindestens ein weiteres der Endgeräte übertragenen Diensten abhängig ist, wobei die Endgeräte eine Zugangspriorität zu den Diensten besitzen, wobei die Liste von Diensten darüber hinaus von dem Zugang zu einem Multiplex durch eines der Endgeräte mit der höchsten Priorität abhängig ist, dergestalt, dass, solange die Kapazität des Gateways Multiplexe zu empfangen nicht ausgeschöpft ist, die Liste von auswählbaren Diensten die Dienste umfasst, die auf allen Multiplexen für die Endgeräte präsent sind, und, sobald die Kapazität ausgeschöpft ist, die Liste von Diensten, die ein Endgerät mit niedrigerer Priorität als das Endgerät mit der höchsten Priorität auswählen kann, auf die auswählbaren Dienste des Multiplexes oder der Multiplexe reduziert wird, die der Gateway empfangen hat.

2. Verfahren nach Anspruch 1, **dadurch gekennzeichnet, dass** das Verfahren eine Bestimmung (60) einer maximalen Priorität des Endgerätes in Abhängigkeit von der Priorität der Endgeräte umfasst, die auf einen Dienst zugreifen.

3. Verfahren nach irgendeinem der Ansprüche 1 bis 2, **dadurch gekennzeichnet, dass** die Multiplexe per Satellit übertragen werden.

4. Verfahren nach irgendeinem der Ansprüche 1 bis 3, **dadurch gekennzeichnet, dass** die Multiplexe aus Multiplexen des digitalen terrestrischen Fernsehens bestehen.

5. Verfahren nach irgendeinem der Ansprüche 1 bis 4, **dadurch gekennzeichnet, dass** der Übertragungsschritt (96, 113, 114, 108) einer Liste von mindestens einem Dienst, auswählbare Dienste genannt, zu mindestens einem der Endgeräte aus einer Ausstrahlung gemäß einem UDP-Protokoll besteht.

6. Verfahren nach irgendeinem der Ansprüche 1 bis 5, **dadurch gekennzeichnet, dass** es mindestens einen Verwaltungsschritt (95, 101, 104, 107) einer Sendung eines Dienstes an ein Endgerät umfasst, die eine Übertragung eines Befehls gemäß einem IGMP-Protokoll umfasst.

7. Gateway (10), der in der Lage ist, eine Vielzahl von digitalen Multiplexen zu empfangen und Dienste des digitalen Fernsehens an Endgeräte zu übertragen, wobei jedes Multiplex mindestens einen digitalen audiovisuellen Dienst umfasst, wobei der Gateway eingerichtet ist, um eine begrenzte Anzahl an Multiplexen aus der Vielzahl zu empfangen, wobei die Anzahl in Abhängigkeit von der Kapazität von einem oder mehreren Empfangstunern begrenzt wird, und um sie an mindestens ein Endgerät (12 bis 14) zu übertragen, das an den Gateway angeschlossen ist, umfassend Mittel zum Übertragen einer Liste (261, 262) von mindestens einem Dienst, auswählbare Dienste genannt, an mindestens eines der Endgeräte, wobei die auswählbaren Dienste auf den Multiplexen präsent sind, die der Gateway empfangen kann, **dadurch gekennzeichnet, dass** die Liste von auswählbaren Diensten von bereits an mindestens ein weiteres der Endgeräte übertragenen Diensten abhängig ist, wobei die Endgeräte eine Zugangspriorität zu den Diensten besitzen, wobei die Liste von Diensten darüber hinaus von dem Zugang zu einem Multiplex durch eines der Endgeräte mit der höchsten Priorität abhängig ist, dergestalt dass, solange die Kapazität des Gateways Multiplexe zu empfangen nicht ausgeschöpft ist, die Liste von auswählbaren Diensten die Dienste umfasst, die auf allen Multiplexen für die Endgeräte präsent sind, und, sobald die Kapazität ausgeschöpft ist, die Liste von Diensten, die ein Endgerät mit niedrigerer Priorität als das Endgerät mit dem höchsten Priorität auswählen kann, auf die auswählbaren Dienste des Multiplexes oder der Multiplexe reduziert wird, die der Gateway empfangen hat.

8. Kommunikationsnetz (1), Endgeräte (12 bis 14) und einen Gateway (10) nach Anspruch 7 umfassend, der in der Lage ist, eine Vielzahl von digitalen Multiplexen zu empfangen und Dienste des digitalen Fernsehens zu übertragen, wobei jedes Multiplex mindestens einen digitalen audiovisuellen Dienst umfasst, wobei der Gateway eingerichtet ist, um eine begrenzte Anzahl von Multiplexen aus der Vielzahl zu empfangen, wobei die Anzahl in Abhängigkeit von der Kapazität von einem oder von mehreren Empfangstunern begrenzt wird, und um sie an die Endgeräte zu übertragen, die an den Gateway angeschlossen sind,
wobei der Gateway Mittel zum Übertragen einer Liste (261, 262) von mindestens einem Dienst, auswählbare Dienste genannt, an mindestens eines der Endgeräte umfasst, wobei die auswählbaren Dienste auf den Multiplexen präsent sind, welche der Gateway empfangen kann, wobei die Liste von auswählbaren Diensten von bereits an mindestens eines der Endgeräte übertragenen Diensten abhängig ist, wobei die Endgeräte eine Zugangspriorität zu den Diensten besitzen, wobei die Liste von Diensten darüber hinaus von dem Zugang zu einem Multiplex durch eines der Endgeräte mit der höchsten Priorität abhängig ist, dergestalt, dass solange die Kapazität des Gateways Multiplexe zu empfangen nicht ausgeschöpft ist, die Liste von auswählbaren Diensten die Dienste umfasst, die auf allen Multiplexen für die Endgeräte präsent sind, und, sobald die Kapazität ausgeschöpft ist, die Liste von Diensten, die ein Endgerät mit niedrigerer Priorität als das Endgerät mit der höchsten Priorität auswählen kann, auf die auswählbaren Dienste des Multiplexes oder der Multiplexe reduziert wird, die der Gateway empfangen hat.

## Claims

1. Method for transmitting, to terminals, of digital television services by a gateway (10) able to receive a plurality of digital multiplexes, each multiplex comprising at least one digital audiovisual service, the gateway being adapted to receive a limited number of multiplexes among the said plurality, said number being limited according to the capacity of one or more reception tuners, and to transmit them to at least one terminal (12 to 14) linked to said gateway, comprising a step of transmitting (43) a list (261, 262) of at least one service, called selectable services, to at least one of said terminals, the selectable services being present on the multiplexes which the gateway can receive, **characterized in that** said list of selectable services is dependent on the services already transmitted to at least one other of said terminals, said terminals possessing an access priority to the services, the said list of services depending furthermore on access to a multiplex by one of the said terminals with a highest priority level, so that, as long as the capacity of the gateway to receive multiplexes is not reached, the list of selectable services comprises the services present on all multiplexes for the said terminals, and as soon as the said capacity is reached, the list of services selectable by a terminal of lower priority than the said terminal with the highest priority level is reduced to the selectable services on the multiplex or the multiplexes received by the gateway.

2. Method according to claim 1, **characterized in that** the method comprises a determination (60) of a maximum terminal priority according to the priority of the terminals accessing a service.

3. Method according to any one of claims 1 to 2, **characterized in that** said multiplexes are transmitted by satellite.

4. Method according to any one of claims 1 to 3, **characterized in that** said multiplexes are of a terrestrial digital television multiplex type.

5. Method according to any one of claims 1 to 4, **characterized in that** said transmission step (96, 113, 114, 108) of a list of at least one service, called selectable services, to at least one of the said terminals is a broadcast according to a UDP protocol.

6. Method according to any one of claims 1 to 5, **characterized in that** it comprises at least one step of management (95, 101, 104, 107) of a sending of a service to a terminal comprising a transmission of a command according to an IGMP protocol.

7. Gateway (10) able to receive a plurality of digital multiplexes and to transmit digital television services to terminals, each multiplex comprising at least one digital audiovisual service, the gateway being adapted to receive a limited number of multiplexes among the said plurality, the said number being limited according to the capacity of one or more reception tuners, and to transmit them to at least one terminal (12 to 14) linked to the said gateway, comprising means for transmitting a list (261, 262) of at least one service, called selectable services, to at least one of the said terminals, the selectable services being present on the multiplexes which the gateway can receive, **characterized in that** the said list of selectable services being dependent on the services already transmitted to at least one other of the said terminals, the said terminals possessing an access priority to the services, the said list of services depending furthermore on access to a multiplex by one of the said terminals with a highest priority level, so that, as long as the capacity of the gateway to receive multiplexes is not reached, the list of selectable services comprises the services present on all multiplexes for the said terminals, and as soon as the said capacity is reached, the list of services selectable by a terminal of lower priority than the said terminal with the highest priority level is reduced to the selectable services on the multiplex or multiplexes received by the gateway.

8. Communication network (1) comprising terminals (12 to 14) and a gateway (10), according to claim 7 able to receive a plurality of digital multiplexes and to transmit digital television services to terminals, each multiplex comprising at least one digital audiovisual service, the gateway being adapted to receive a limited number of multiplexes among the said plurality, the said number being limited according to the capacity of one or more reception tuners, and to transmit them to the said terminals linked to the said gateway, the gateway comprising means for transmitting a list (261, 262) of at least one service, called selectable services, to at least one of the said terminals, the selectable services being present on the multiplexes which the gateway can receive, the said list of selectable services being dependent on the services already transmitted to at least one other of the said terminals, the said terminals possessing an access priority to the services, the said list of services depending furthermore on access to a multiplex by one of the said terminals with a highest priority level, so that, as long as the capacity of the gateway to receive multiplexes is not reached, the list of selectable services comprises the services present on all multiplexes for the said terminals, and as soon as the said capacity is reached, the list of services selectable by a terminal of lower priority than the said terminal with the highest priority level is reduced to the selectable services on the multiplex or the multiplexes received by the gateway.
